# EUROPEAN PATENT SPECIFICATION

(11) **EP 0 594 790 B1**
(45) Date of publication and mention of the grant of the patent: **25.03.1998**
(21) Application number: 92917833.3
(22) Date of filing: 17.07.1992
(51) Int. Cl.: C08F 20/56, C08F 8/28

(54) **POLYACRYLAMIDE GEL MATRIX**
POLYACRYLAMID-MATRIX-GEL
MATRICE DE GEL POLYACRYLAMIDE

(30) Priority: 17.07.1991 US 731427
(43) Date of publication of application: 04.05.1994
(60) Divisional application: 97113581.9
(73) Proprietor: NATIONAL DIAGNOSTICS, Atlanta, GA 30336 (US)
(72) Inventor: MIRSKY, Jeffrey, Atlanta, GA 30350 (US); SCHWARTZ, Arthur, L., Belle Mead, NJ 08835 (US)
(74) Representative: Sexton, Jane Helen
(86) International application number: US9206044
(87) International publication number: WO9302115

(56) References cited:
- EP-A- 0 291 182
- FR-A- 2 345 470
- FR-A- 2 377 421
- US-A- 4 039 498
- US-A- 4 155 405
- US-A- 4 254 008
- US-A- 4 492 494
- US-A- 4 504 641
- US-A- 4 954 538

## Description

### Field of the Invention

This invention relates to polyacrylamide gel matrices and methods for their formation.

### Background of the Invention

Acrylamide is commonly polymerized to form a polyacrylamide gel matrix by addition of an initiator such as ammonium persulfate, TEMED, riboflavin, or peroxide. In addition, small amounts of crosslinkers such as N,N'-methylene bis acrylamide may be added to the acrylamide before initiation to form a rigid gel. In a typical polyacrylamide gel matrix preparation, the acrylamide monomer and a suitable crosslinker are dissolved in water, and a small amount of initiator added to begin the polymerization process. Oxygen is generally excluded during this polymerization process since it inhibits polymerization.

The rigid polyacrylamide gel matrices are useful for the separation of biological substances, e.g., DNA fragments and proteins by electrophoresis or other active or passive diffusive methods.

Many publications exist which describe use of various crosslinkers in formation of polyacrylamide gels, mixing of polyacrylamide with other gelling agents, and chemical modification of the polyacrylamide structure. For example, Richards and Lecanidou, Electrophoresis and Isoelectric Focusing in Polyacrylamide Gels, Walter de Gryster, NY, p. 16, 1974, describe the kinetics of polymerization of polyacrylamide gels, and the effect of crosslinking on gel properties; Brown et al., Electrophoresis ed. B. Berlin, p. 235, 1979, notes that use of the crosslinker ethylene diacrylate results in a polyacrylamide gel which is soluble in 1M NaOH at 37°C; Baumann and Chrambach, 70 Anal. Chem. 32, 1976 describe use of the crosslinker DATD (N,N'-diallyltartar-diamide) to form polyacrylamide gels of large pore size; Nochumson, U.S. Patent 4,504,641, describes use of a polysaccharide as a crosslinking agent in polyacrylamide gels; Bode, 83 Anal. Biochem. 204, 1977, describes use of a mixture of liquid polyacrylamide and agar to form a gel; and Cyanamid, "Cyanamer Polyacrylamides For the Processing Industry, American Cyanimid Co., Chemical Products Division, Process Chemical Dept. Wayne, NJ 07470, describes formation of modified polyacrylamides; e.g., methylolation by formaldehyde by mixing polyacrylamide with formaldehyde at 37°C at pH 10-10.5, followed by hydroxylamine treatment, and various other modifications using combinations of formaldehyde and other chemicals.

US-A-4155405 describes the production of polyacrylamides. Molecular weights between 100,000 and 400,000 are not reported as forming gels.

### Summary of the Invention

Applicant has discovered that a useful polyacrylamide or polyacrylate gel can be formed by reacting a chemically modified or unmodified polyacrylamide solution and a chemically reactive crosslinking agent together. With this method, electrophoretic gels can be produced which offer a combination of properties not observed with conventional polyacrylamide gels (formed directly from monomeric acrylamide), agarose gels or derivatized agarose gels (see e.g., Guiseley, U.S. Patent 3,956,273, and Cook, U.S. Patent 4,319,975). The advantages of the gels of this invention, and the methods for their production include:
1. Production of a thermally disruptable gel matrix which can be liquified and remain liquified at relatively low temperature (40°C-100°C). The use of such a low temperature maintains the integrity of biological function of the material separated by the gel matrix, and permits release of the samples in the gel matrix without further separation or purification. In contrast, while agarose gels melt on heating, they resolidify on cooling to room temperature, thus, they do not permit manipulation, in liquid form, of those molecules separated by the electrophoretic process without further manipulations, e.g., dilution of the agarose.
2. A user is not exposed to the neurotoxic monomers or toxic initiators required in the conventional polyacrylamide gel casting procedure.
3. Gel clarity is superior to that of agarose and derivatized agarose.
4. The sieving characteristics of the gel matrix are superior to those of agarose or conventional polyacrylamide, especially for samples including DNA fragments having between ten base pairs and twenty thousand base pairs.
5. Unlike agarose matrices, those of this invention contain no contaminating biologically interfering compounds. Thus, no purification of molecules separated in these matrices is required from such contaminants, when these molecules are removed from the matrix for use or analysis.

In one example of the method, polyacrylamide of a chosen molecular weight is crosslinked with a bifunctional compound, such as a bialdehyde, to provide a crosslinked polyacrylamide gel. No acrylamide or hazardous initiator, such as ammonium persulfate and TEMED, or peroxide is required. In addition, the gel matrix will polymerize to form a rigid gel even in the presence of air or oxygen.

More specifically, a polyacrylamide molecule of molecular weight 100,000-400,000, is used as a preformed solid powder, or can be generated in situ as a pure homopolyacrylamide or a copolymer solution. The polyacrylamide is crosslinked via amide groups in its structure by a bialdehyde in a basic solution. The crosslinking reaction can also be performed with a monoaldehyde or higher aldehydes. Typically, the polyacrylamide is dissolved in water, the aldehyde added, a base is added, and after a period of time a gel is formed. If desired, the reaction mixture can be heated (e.g. to 55°C or higher) or cooled to increase or decrease the gelation rate respectively. The gelation reaction can be performed in any size or shape vessel, either open to the atmosphere or closed, in accordance with the desired shape and dimensions of the final gel.

Gel matrices produced according to the invention are useful as substitutes for existing electrophoretic agarose or polyacrylamide gels.

Thus, in a first aspect, the invention features a method for forming a biological-molecule separating solid gel matrix, including contacting together in an alkaline solution: (a) homopolymeric or heteropolymeric polyacrylamide molecules comprising amide groups wherein said molecules each have a molecular weight of between 100,000 and 400,000 and (b) an aldehyde adapted to covalently bond with at least two of the amide groups on separate polyacrylamide molecules to covalently bond the sperate polyacrylamide molecules together. In the method, sufficient covalent bonds are formed between the polyacrylamide molecules to cause the solution to form a solid gel matrix adapted for separation of biological molecules.

In preferred embodiments of the above aspects, the polyacrylamide molecules each have a molecular weight of between 200,000 and 400,000; the polyacrlyamide molecules cross-linked with aldehyde contain carbon-nitrogen amide bonds which can be cleaved by heating to temperatures between 40°C and 100°C; the polyacrylamide molecules crosslinked with glyoxal contain vicinal dihydroxy carbon-carbon bonds which can be cleaved by periodate at a temperature between 0°C and 40°C; the polyacrylamide molecule is a heteropolymer and includes amide and ester groups; the concentration of the polyacrylamide molecules in the solution, and the molecular weight of these molecules is chosen to form a gel matrix adapted for separation of macromolecules, such as DNA fragments consisting essentially of between ten base pairs and twenty thousand base pairs, and to form an optically clear gel matrix, e.g., the solid gel matrix is adapted to allow physical separation of the five DNA fragments of HaeIII-treated pBR322 of 587, 540, 504, 458, and 434 base pairs, or lambda EcoRI-HindIII DNA fragments of 5148, 4973, and 4277 base pairs, or lambda HindIII fragments of 23,000, 9416, 6557 and 4361 base pairs; and the gel matrix is formed in the presence of oxygen, or air.

In other preferred embodiments, the polyacrylamide molecules have the chemical formula 1: 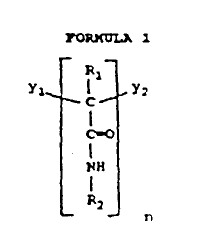 where each R₁ and R₂ may be the same or different and are generally chosen from hydrogen or another chemical group which does not interfere with formation of the desired covalent bonds formed in the crosslinking process; Y₁ and Y₂ may be the same or different, and each represents a portion of a polyacrylamide chain (having a molecular weight of between 250 and 6 million), a portion of an acrylamide molecule, or a hydrogen or CH₃ group; and n is between 1 and 300,000, more preferably between 100 and 100,000, and most preferably between 500 and 10,000.

In more preferred embodiments, R₁ and R₂ are selected from hydrogen, methyl, ethyl, propyl, isopropyl, phenyl, 1-hydroxyethyl, 2-hydroxyethyl, hydroxymethyl, 2-hydroxypropyl, 3-hydroxypropyl, 3-dimethylaminopropyl, 2-dimethylaminoethyl, glycinyl, trishydroxymethylmethyl, benzyl, phenyl, carboxy-α-hydroxymethyl methyl ester, and 3-methoxypropyl; the aldehyde is a monoaldehyde or a bialdehyde, e.g., the monoaldehyde has the chemical formula R-CH=0, and the bialdehyde has the chemical formula 0=HCRCH=0, where R is an organic moiety having between 1 and 10 carbons, e.g., formaldehyde (where the contacting step includes heating the solution to at least 50°C) or R is a chemical bond, e.g., glyoxal. Examples of R include paraffinic, olefinic, or aromatic moieties which may contain oxygen, nitrogen, sulfur, boron, fluorine, chlorine, bromine, iodine, sodium, or potassium that may be cyclic, linear or branched; and examples of aldehydes include glutaraldehyde, malonaldehyde, ortho, meta or paraphthalaldehyde, adipaldehyde and hydroxyadipaldehyde.

In yet other preferred embodiments, the solid gel matrix includes a crosslinked polyacrylamide having the formula 2 or 3: 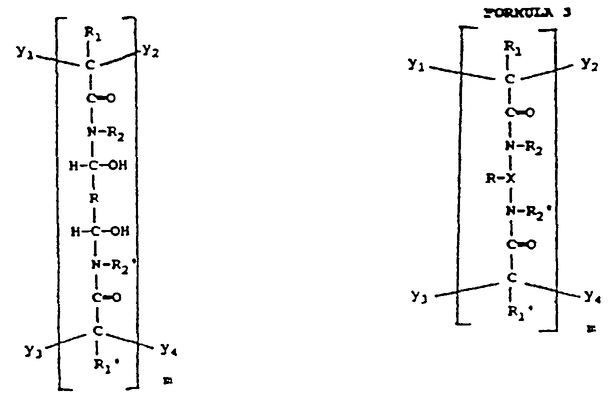 where R and X separately are organic molecules having between 1 and 10 carbon atoms, (e.g., X may be C), and R may also be simply a chemical bond, and where R₁, R₂, R₁', and R₂' are the same or different and have a chemical formula chosen from hydrogen or another chemical group which does not interfere with formation of the desired covalent bond, m is between 1 and 300,000; and each Y₁, Y₂, Y₃, and Y₄ may be the same or different, and each represent a portion of a polyacrylamide chain or a portion of an acrylamide molecule, hydrogen, or a CH₃ group.

In still other preferred embodiments, the method further includes the step of forming the polyacrylamide by contacting acrylamide with an initiator, e.g. triethanolamine, triethylamine or TEMED and ammonium persulfate; and the step of forming the polyacrylamide includes forming a polyacrylamide with a molecular weight between 200,000 and 400,000.

In related aspects, the invention features polyacrylamide gel matrices including polyacrylamide molecules held together by a plurality of identical crosslinking groups. In preferred embodiments, these crosslinking groups have one of the formulae:

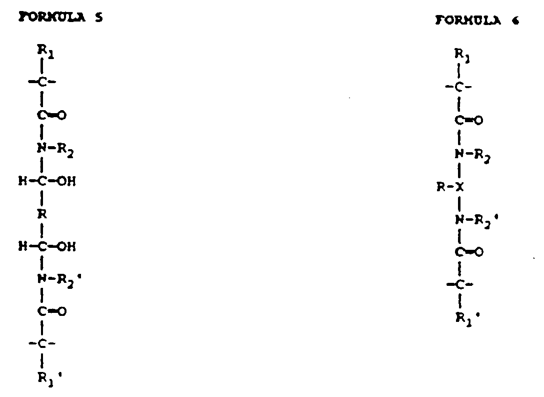

Applicants are the first to provide polyacrylamide matrices which have such identical crosslinking groups (and no other crosslinking group). Thus, they are the first to provide a matrix with a more defined chemical structure.

In other related aspects, the invention features a gel matrix formed by any of the above-described methods; a polyacrylamide gel matrix including a crosslinked polyacrylamide having the above chemical formula 2 or 3, with the gel matrix adapted to separate the five DNA fragments of HaeIII-treated pBR322 having 587, 540, 504, 458, and 434 base pairs, or lambda EcoRI-HindIII DNA fragments of 5148, 4973, and 4277 base pairs, or lambda HindIII fragments of 23,000, 9416, 6557 and 4361 base pairs, a kit for forming a gel matrix which includes in separate containers polyacrylamide molecules, (e.g. of formula 1 above) suitable for the electrophoresis of biological molecules having one or more amide groups, wherein said molecules each have a molecular weight of between 100,000 and 400,000 and in a separate container an aldehyde having a plurality of aldehyde groups, where the aldehyde is each adapted to covalently bond with at least two of the amide groups on separate polyacrylamide molecules to covalently bond the separate polyacrylamide molecules together to form sufficient covalent bonds to cause the solution to form a gel matrix suitable for the separation of biological molecules.

In yet another aspect, the invention features a method for purifying a biological macromolecule by passing the biological macromolecule by passing the biological macromolecule through a gel matrix formed by the methods described above to separate the biological macromolecule from other components with which it occurs.

In preferred embodiments, the method further includes removing the biological macromolecules from the gel matrix by liquefying the gel matrix, e.g., by heating at between 40°C and 100°C, or by treatment with periodate at a temperature between 4°C and 40°C.

While applicant is particularly interested in formation of gel matrices for separation of biological molecules, it is recognized that gel matrices of this invention are useful in a wide variety of other fields, e.g., for cosmetics, such a face packs, for wound dressings, and other uses well known to those in the art. It can also be used for reduction molding as described below.

Other features and advantages of the invention will be apparent from the following description of the preferred embodiments thereof, and from the claims.

### Description of the Preferred Embodiments

The drawings will first briefly be described.

### Drawings

Figs. 1 and 2 are representations of chemical reactions to form polyacrylamide from acrylamide monomers;
Fig. 3 is a representation of a chemical reaction to form a crosslinked polyacrylamide gel matrix of this invention from polyacrylamide and a bialdehyde;
Fig. 4 is a representation of a chemical reaction to form a crosslinked polyacrylamide gel matrix from polyacrylamide and a monoaldehyde;
Figs. 5A and 5B are representations of chemical reactions which solubilize polyacrylamide gels of this invention.
Figs. 6A and 6B are photographs of a gel of this invention, and a 4% agarose gel, respectively, showing relative separations of HaeIII-digested pBR322 DNA.

### Polyacrylamide

Polyacrylamide molecules useful in this invention are generally described above. For example they preferably have a molecular weight between 200,000 and 400,000 and can be obtained as a preformed commercially available solid powder, or can be generated *in situ* from a suitable acrylamide or acrylate monomer, or from a combination of monomers, to produce either a pure homo- or heteropolyacrylamide (also called copolyacrylamide).

Below is provided details of formulation of suitable polyacrylamides.

### Formation of Polyacrylamide

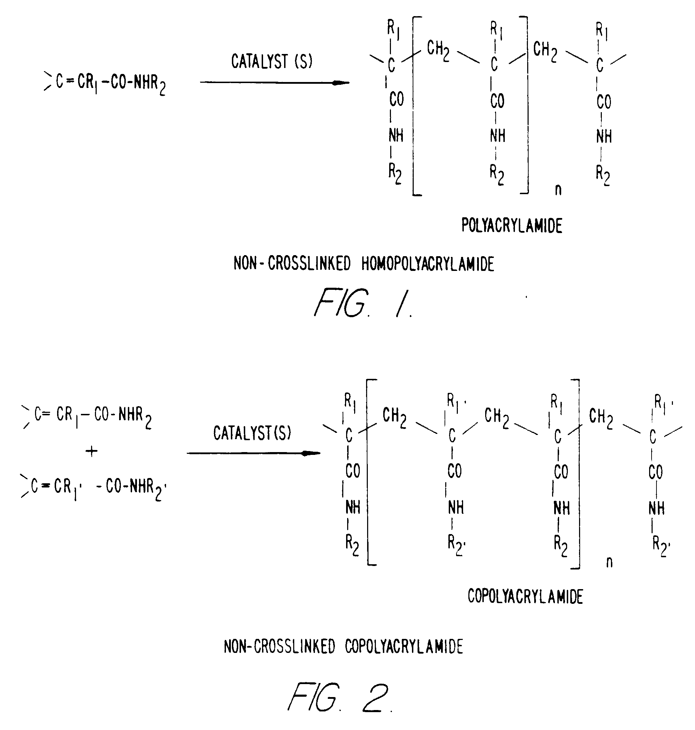

Referring to Fig. 1, there is shown in schematic form the production of polyacrylamide from acrylamide. This reaction is performed by use of a catalyst, as discussed above, and in the absence of oxygen. Each R₁ and R₂ group can be the same or different and the choice of such groups is well known in the art. The number of covalently linked acrylamide molecules (i.e., "n" in Fig. 1) can be varied by standard procedure, and preferably is chosen to give the desired molecular weight.

Referring to Fig. 2, a polyacrylamide can also be produced by using more than one derivatized acrylamide monomer; here each derivative is shown as R₁, R₂, R₁' and R₂', all well known to those in the art. Of course the actual sequence of R₁ and R₁' (and corresponding R₂ and R₂') along the length of the polyacrylamide molecule will vary dependent upon the sequence of chemical reaction of the two monomers--thus, the actual mixed polyacrylamide shown in Fig. 2 is only one example of the possible mixed polyacrylamides that can be formed.

The above-noted R groups can be chosen to impart desired chemical properties to the monomers and the resulting polymers. These qualities include water solubility, low toxicity, low steric bulk to afford rapid polymerization, a nitrogen-hydrogen bond (N-H) without which crosslinking cannot occur, and minimal ultraviolet light absorption. Examples of R₁ and R₁' may include, but are not limited to: hydrogen, methyl, ethyl, propyl, isopropyl, phenyl, 1-hydroxyethyl, 2-hydroxyethyl, hydroxymethyl, 2 or 3-hydroxypropyl; and examples of R₂ and R₂' can include, but are not limited to: hydrogen, methyl, ethyl, propyl, isopropyl, 1 or 2-hydroxyethyl, hydroxymethyl, 2 or 3-hydroxypropyl, 3-dimethylaminopropyl, 2-dimethylaminoethyl, glycinyl, trishydroxymethylmethyl, benzyl, phenyl, carboxy-α-hydroxymethyl methyl ester, 3-methoxypropyl.

In practice, acrylamide is dissolved in water with catalyst and co-catalyst. Polymerization will take place in a stoppered vessel with or without the administration of nitrogen gas or application of a vacuum. Polymerization will also take place in an open vessel if the surface of the liquid is blanketed with nitrogen, or if the contents are internally purged with nitrogen. If the vessel has a constrictive opening, polymerization may take place without nitrogen.

### Molecular Weight

In the invention, polyacrylamide in the molecular weight (MW) range of 100,000-400,000 is useful, but a preferred MW range is 200,000-400,000. If the MW of polyacrylamide is too low, subsequent gelation may never occur. If the molecular weight of the polyacrylamide is too high, the polymer solution becomes very viscous and difficult to pour. MW also affects other factors, as described below.

### Gelation Rate

The rate of gelation is directly proportional to the MW of the polyacrylamide. High MW leads to rapid gelation and low MW leads to slow gelation (>4 hours). The rate of gelation of gel matrices of this invention is also proportional to pH. At high pH (9-10) gelation is fast (i.e., within 4 hours), at low pH (7-8) gelation is slow. If the polymer solution has a low pH (6.5-7.5), even a large amount of externally added base, such as sodium carbonate, will not be able to overcome the buffering capacity of the solution and gelation will proceed slowly. If the native pH of the polymer solution is high (8.0-9.0), a small amount of the external base will still cause fast gelation. In some cases when the endogenous pH of the polymer solution is too low (<6), even if external base is added in quantities to create a pH that would normally produce rapid gelation, gelation is still very slow. The optimal pH of the polymer solution is 8-9. In this range the polymer is stable, with little loss in amide groups due to hydrolysis, yet small amounts of external base are required to obtain fast gelation. Even without the external base added, the polymer solution in the pH range of 8-9 can gel within 30 minutes to 4 hours.

A polyacrylamide solution of manageable viscosity can be made to gel very rapidly if other parameters, such as quantity of external base, amount of bialdehyde or equivalent crosslinker, and temperature, are properly adjusted.

### Gel Strength

Gel strength diminishes as polyacrylamide MW decreases. The MW should be such that a polymer solution with useful flow properties is made to gel at a convenient rate to produce a gel of good mechanical strength that can withstand various physical manipulations necessary in later use of the gel matrix.

### Gel Resolution

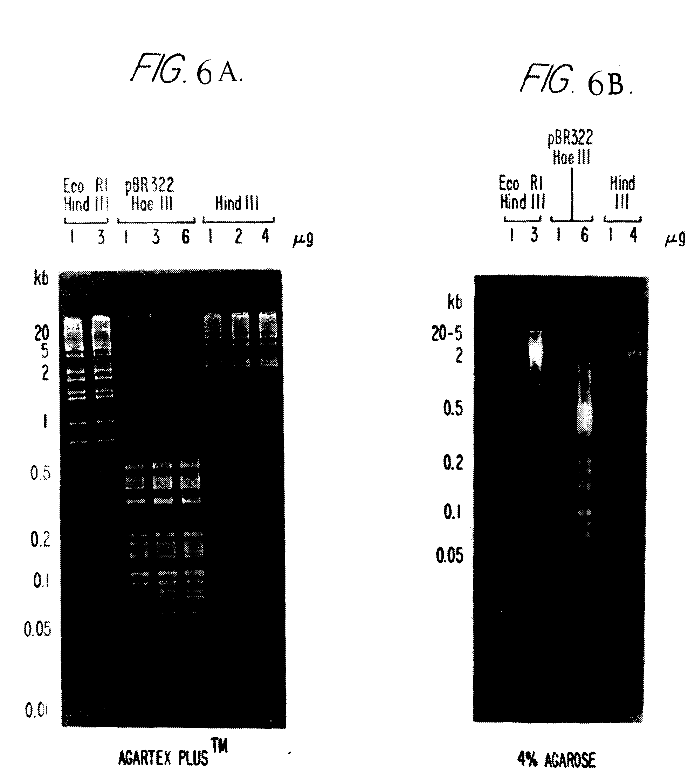

It is also important for some uses to have a gel matrix formed with adequate electrophoretic resolving power. If the MW is too high, the resolution will diminish. Gel matrices of this invention provide excellent resolution, that is, the ability to separate DNA fragments which are very similar in size. For example, referring to Fig. 6A, there is shown a region in the electrophoretic pattern of a plasmid sample (HaeIII-digested pBR322) consisting of 5 fragments of size 587, 540, 504, 458, and 434 base pairs (bp). With certain desired matrices of this invention, each fragment can be clearly and distinctly seen (see e.g., Iµg digest in Fig. 6A, and are defined herein as "separated"). In other matrices (Fig. 6B), two or three of the fragments at 540, 504 and 458 bp can be seen as one or two bands only (see e.g., 1µg digest in Fig. 6B; these are not "separated" as the term is used in this application). A sample of large DNA fragments, such as lambda DNA digested by HindIII, shows bands at 23,000, 9416, 6557 and 4361 bp. These bands can all be seen in certain gel matrices of this invention as being clearly separated. In another sample of lambda DNA, digested first by EcoRI and then by HindIII, more than the three expected bands at 5148, 4973 and 4277 bp can be seen on these gels. The original assignments of these bands were based on agarose electrophoresis, but since the matrix system of this invention has greater resolution than agarose, it separates each component into fragments which were heretofore unknown. Thus, the systems of this invention have the ability to separate fragments which differ in size by 5 or fewer base pairs in a total of over 500 base pairs.

### Porosity

As discussed above, by choosing the appropriate concentrations and the ratio of catalyst and promoter, it is possible to produce polyacrylamide of the desired MW range. In its application relating to electrophoretic gels, the molecular weight of the polyacrylamide of the three-dimensional gel network has a significant influence on the porosity and strength of the gel. Lower molecular weight polyacrylamides produce low porosity gels, and higher molecular weight polyacrylamides produce higher porosity gels. Higher molecular weight polyacrylamides also produce gels with greater tensile strength than do the lower polyacrylamide molecules. Therefore, in addition to varying the degree of crosslinking, the porosity of a gel can be controlled by molecular weight selection, which can be tuned very accurately by adjustment of the concentrations and ratios of the catalyst and promoter. An additional dimension of resolution has thus been added to gel electrophoresis which heretofore could not be accomplished.

Porosity can be varied by controlling the quantity of crosslinker, aldehyde, or amine. More aldehyde or amine produces more crosslinks and creates a gel of lower porosity. If the pores are too small, even small DNA may not enter the pore and, as a result, resolution will be diminished by a back up in the flow of macromolecules through the gel. Porosity, like the other above discussed parameters, must be optimized by adjusting crosslinker concentration. A large DNA fragment that does not fit the pores at all passes through the void volume of the gel. Increasing the mass percentage of the gel decreases the void volume. If there is too little void volume, large DNA will not enter the gel and resolution is lost. If the void volume is too large, selectivity and hence resolution is lost. Void volume, like porosity, should be optimized, e.g., by adjusting the concentration of polyacrylamide.

Thus, low molecular weight polyacrylamide offers the advantages of forming free flowing solutions giving gel matrices with good resolution, or band separation, within the DNA fragment range of 10 to 10,000 base pairs. High MW polyacrylamide solutions, however, produce gel matrices which offer the advantages of faster gelation times and greater mechanical strength. Those in the art will recognize which gel matrix is desirable in any particular use. Thus, a gel matrix for biomolecular separation is preferably formed from polyacrylamide of molecular weight 100 000 - 400 000; while a gel matrix for use in cosmetics may be formed with higher molecular weight polyacrylamide.

### Measurement of Molecular Weight

Viscometric measurements can be used to readily determine the MW of a polyacrylamide by comparison with reference polyacrylamides of known MW. In general, high concentrations of catalysts and/or promoters produce more free radical initiators which start growth of more polymer chains in a unit time. Hence, more short chains are generated. In contrast, when low catalyst concentrations are utilized, longer polymer chains are formed. Even though the relationship of catalyst concentration to MW is known in the art, the optimal MW for any desired application may be chosen empirically, e.g., by observation of electrophoresis data with a chosen gel matrix, using techniques well known in the art.

### Initiators

Initiation of polymerization of the monomer(s) can be affected by a variety of means. Sodium, potassium or ammonium persulfate, either alone or at an elevated temperature or in combination with a promoter or co-catalyst, specifically tetramethylethylenediamine (TEMED), make effective initiator systems for this polymerization. Applicant has discovered, however that triethanolamine and triethylamine also make efficient promoters. Triethanolamine is of special significance as a promoter because its low pK₈ and non-aggressive chemical reactivity belie its efficiency in such a process. Triethanolamine is an odorless viscous liquid with virtually no chronic health problems. It is also a constituent of numerous cosmetic and health care products, thus making use of the resulting gel matrix as a cosmetic more suitable than use of a more toxic initiator. In addition, we have found that triethanolamine is more suitable in electrophoretic separation of biomolecules. For example, after a gel is formed by crosslinking polyacrylamide, the residual promoter (TEMED or triethanolamine) causes the alkalinity of the gel to increase during electrophoresis (ionic components of the gel buffer are removed by the current, but TEMED or triethanolamine, which are neutral, remain in the gel without their base strength being moderated by other ions). The increased alkalinity can cause breakdown of the gel structure and can also denature DNA. Therefore, the more moderate base, triethanolamine, is more desirable.

### Crosslinking

In the method of this invention, the above polyacrylamide solution, or a preformed polyacrylamide material, is dissolved in water and gelled in the presence of an aldehyde, and a base. Depending upon the endogenous alkalinity of the in situ polyacrylamide solution, the base can be omitted.

### Bialdehyde

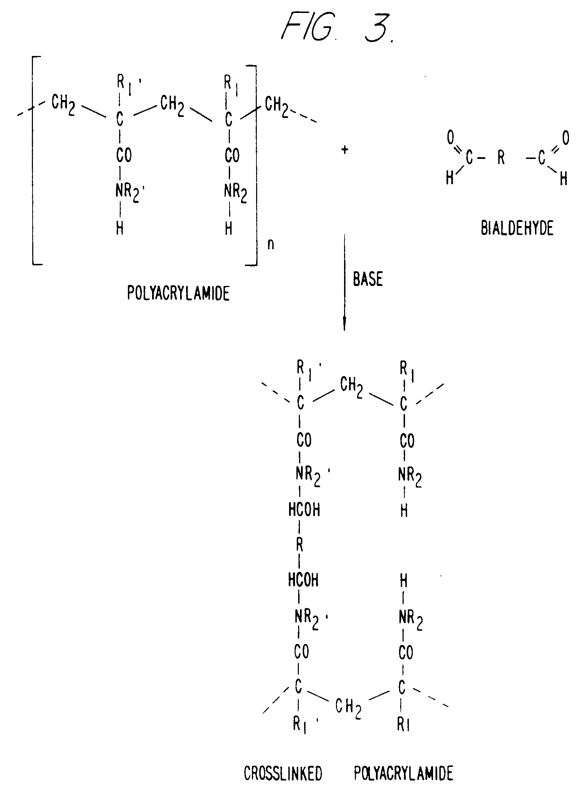

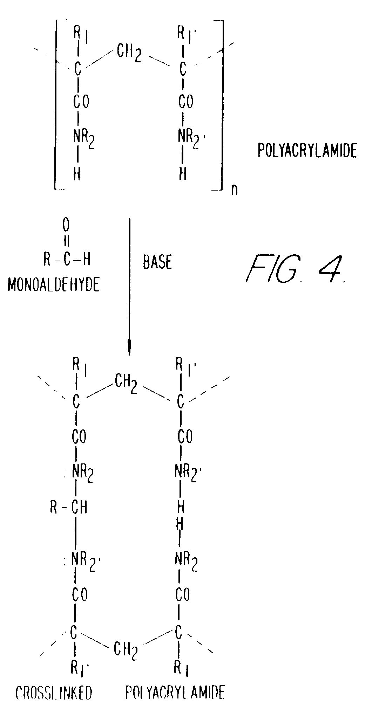

A general scheme for the reaction with a bialdehyde is provided in Fig. 3. In this figure, R is a chemical bond, or any group which does not interfere with the desired crosslinking reaction, for example it may be a paraffinic, olefinic or aromatic moiety and may contain, but is not limited to, carbon and hydrogen atoms. Any other known atom, in particular oxygen, nitrogen, sulfur, boron, fluorine, chlorine, bromine, iodine, sodium or potassium, may be a constituent of the representative R group. The representative R group in bialdehydes and monoaldehydes (see Fig. 4) may also be cyclic, linear or branched. More specifically, representative aldehydes are glyoxal, glutaraldehyde, malonaldehyde, ortho, meta or paraphthalaldehyde, adipaldehyde or hydroxadipaldehyde.

As relates to the base in Fig. 3, this entity can be any non-nucleophilic inorganic or organic basic buffer system. Non-nucleophilic means that the base will only remove a proton, it will not attack the carbonyl carbon of the aldehyde crosslinker. A nucleophilic base would do both. Primary and secondary amines are nucleophilic bases because of their NH bonds. Tertiary amines, (R)₃N, have no N-H bond and are too sterically bulky to attach the aldehyde; thus, they are non-nucleophilic. Hydroxide is an example of a nucleophilic inorganic base.

Specific representative basic systems are: sodium, potassium or lithium borate; tri- or di- sodium phosphate; sodium, potassium or lithium hydroxide; sodium, potassium or lithium carbonate; sodium, potassium or lithium bicarbonate; calcium carbonate, calcium hydroxide, EDTA, triethylamine, trimethylamine, triethanolamine, TEMED, dimethylaniline, tributylamine, methyldiethanolamine, pyridine, dimethylaminopyridine, 4-(dimethylamino) phenethyl alcohol, hexamethylenetetramine, and N-methylmorpholine.

Although one formula of a crosslinked polyacrylamide is provided in Fig. 3, it will be clear to those in the art that this is only a representative formula. The actual crosslinks can be formed between any available amide group in the polyacrylamide molecules and such crosslinks may occur at each amide group or only a few. Clearly, the extent of crosslinking depends on the chemical reagents used, their concentrations, and the pH and temperature of the reaction. By varying these components, any desired porosity and rigidity of gel can be obtained as described above. (In Fig. 3, as in other Figures, the covalent linkage of the crosslinked moiety to the remainder of a polyacrylamide molecule is indicated by broken lines.)

Gels produced as a result of the crosslinking reaction shown in Fig. 3 can be solubilized in water at 40-99°C. These gels can also be solubilized in 0.01-1.0M sodium or potassium periodate at 4-40°C, or in 0.01-1.0M periodic acid at 4-40°C. These gels can also be solubilized in an alkaline solution, e.g., lithium, sodium or potassium hydroxide, lithium, sodium or potassium carbonate, ammonia, trimethylamine, choline, methylamine, or diethylamine at room temperature (20°C).

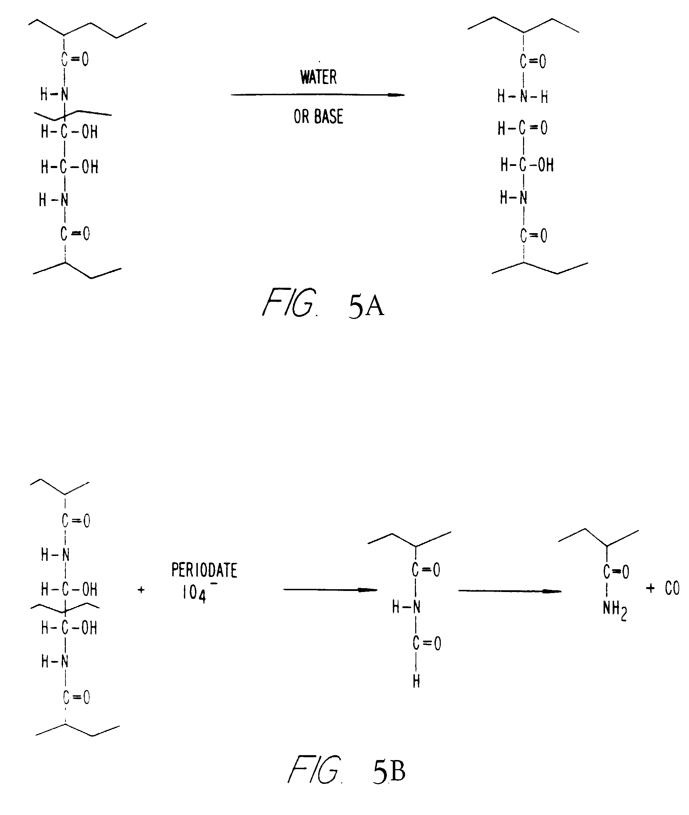

Referring to Figs. 5A and 5B, water or base solubilizes the gel by cleaving the nitrogen-carbon bond of the amide group. Periodate solubilizes by cleaving the vicinal OH group.

### Monoaldehyde

Referring to Fig. 4, there is shown an example of the crosslinking of polyacrylamide by a monoaldehyde. (The R groups and n are as defined above, and the actual formula of the resulting crosslinker polyacrylamide varies, as discussed above, dependent on how many crosslinks occur and whether they form between or within polyacrylamide molecules.) This reaction occurs at a pH generally above 8.5. At lower temperatures little or no crosslinking occurs and no solid gel matrix as defined in this invention is formed. Rather, the polyacrylamide is merely derivatized. See, Cyanimid, supra.

The following are examples of the above generally described methods. These examples are not limiting in the invention and those in the art will recognize the equivalent chemicals and their proportions which can be used in the methods.

### Example 1: Glyoxal Crosslinking of Homopolymer

Seven grams of acrylamide were diluted to 100 ml with distilled water. 113 mg of ammonium persulfate was added and the solution mixed and purged with nitrogen. TEMED (222 µl) was added, the nitrogen purge removed, and the reaction vessel sealed and stirred until the reaction exotherm dropped back to room temperature (20°C). One ml of 1N triethanolamine, buffered at pH 8.6 with acetic acid, was added to a 20 ml portion of the polymer solution. A 40% solution of glyoxal (100 µl) was then added, and the solution stirred for several minutes and allowed to gel in the desired shaped vessel.

### Example 2: Glyoxal Crosslinking of Copolymer

The crosslinked polyacrylamide was formed as in Example 1, except that 3 grams of N-methylacrylamide and 4 grams of acrylamide were used in place of 7 grams of acrylamide.

### Example 3: Glyoxal Crosslinking

The crosslinked polyacrylamide was formed as in Example 1, except that the reaction was stirred in a sealed vessel without prior nitrogen purge, or in an open vessel under a blanket of nitrogen.

### Example 4: Deionized Acrylamide

The crosslinked polyacrylamide was formed as in Example 1, except that the acrylamide solution was deionized by mixing it with 0.2 gram of a mixed bed ion-exchange resin until the conductivity was minimized. The solution was then filtered to remove the spent resin.

### Example 5

Nine grams of acrylamide were diluted to 100 ml with water and 0.1 gram of ammonium persulfate added. Triethanolamine (0.6 gram) was added and the reaction stirred in a sealed vessel until the reaction exotherm dropped back to room temperature. A 7% sodium carbonate solution (0.1 ml) and 40% glyoxal solution (20 µl) was added to 20 ml of the polymer solution, and the homogeneous mixture poured into an appropriate mold and permitted to gel.

### Example 6

Polyacrylamide powder (5 grams) was diluted to 100 ml in water. To 20 ml of the above solution, 0.1 ml of 7.5% sodium carbonate and 50 µl of 40% glyoxal were added. The homogeneous solution was poured into an appropriate mold and permitted to gel.

### Example 7: Gel Solubilization

The gels produced in Examples 1 and 5 were solubilized by dissolving the mass of gel in 3 times its mass of water, and heating at 50°C with intermittent or continual stirring until a homogeneous free flowing liquid was produced. Alternatively, they were dissolved in 3 times their weight of 0.2M sodium periodate, and stirred continually or intermittently at room temperature until the mixture became fluid and homogeneous; or the gels were dissolved in 3 times their weight of 0.1N sodium hydroxide and mixed continually or intermittently until the mixture was fluid and homogeneous.

### Use

Additional applications for the matrices of this invention include shrink molding and wound dressing.

It has been observed that a cross-linked polyacrylamide, as described in Example 5, can be poured into a mold and, after the polymerization process is complete, the rigid gel matrix can be removed from the mold. Upon evaporation of water from the gel matrix, which comprises 91% of the mass of the gel matrix, the remaining gel matrix shrinks to 9% of its original size uniformly and in all dimensions. Thus, a perfect size reduction of the original gel matrix is attained to form a mold. Such a mold can be used for making a detailed mold for industrial use by standard procedures. Since the original gel matrix is about ten times larger than the final mold, the detail of the mold can be significantly more intricate than for molds where no such shrinking is possible.

Wound dressings that currently employ acrylamide or polyacrylamide may be substituted with a gel matrix as described in the present invention. A solution, as described in Example 1, is applied in liquid form to a wound or burn. Upon polymerization and dehydration, a gas permeable thin film impervious to bacteria coats the wound, and protects against infection until such a wound heals. Alternatively, a gel matrix of polyacrylamide, cast as described above, can be applied to the wound with or without a separate supporting matrix, e.g., a nylon or cloth.

Additionally, a non-nutritive cell culture support matrix may be made by casting material of the present invention in trays, vessels or petri dishes. Additives to this matrix can be specified so that media can be designed to support or preclude the support of any organism.

Other embodiments are within the following claims.

## Claims

1. A method for forming a biological-molecule-separating solid gel matrix, comprising the steps of:
contacting together in an alkaline solution:
(a) homopolymeric or heteropolymeric polyacrylamide molecules comprising amide groups wherein said molecules each have a molecular weight of between 100,000 and 400,000 and
(b) an aldehyde adapted to covalently bond with at least two of said amide groups on separate polyacrylamide molecules to covalently bond said separate polyacrylamide molecules together; wherein said covalent bonds are formed and cause said solution to form a solid gel matrix adapted for separation of biological molecules.

2. The method of claim 1 wherein said molecules which are covalently bonded together comprise an amide group which is cleaved by heating said molecules at a temperature between 40°C and 100°C at a pH greater than 7.0.

3. The method of claim 2 wherein after said heating said solid gel matrix is liquified and does not resolidify upon cooling to 20°C.

4. The method of claim 3 wherein said heteropolymeric molecule comprises amide and ester groups.

5. The method of claim 1 wherein the concentration of said molecules in said solution and the molecular weight of said molecules is chosen to form a gel matrix adapted for separation of biological macromolecules.

6. The method of claim 1 wherein the concentration of said molecules in said solution and the molecular weight of said molecules is chosen to form an optically clear gel matrix.

7. The method of claim 1 wherein the concentration of said molecules in said solution and the molecular weight of said molecules is chosen to form a solid gel matrix adapted to allow separation of HaeIII-digested pBR322 DNA fragments consisting of 587, 540, 504, 458, and 434 base pairs, or lambda EcoRI-HindIII DNA fragments consisting of 5148, 4973, and 4277 base pairs, or lambda HindIII DNA fragments consisting of 23,000, 9416, 6557 and 4361 base pairs.

8. The method of claim 1 wherein said gel matrix is formed in the presence of oxygen.

9. The method of claim 8 wherein said gel matrix is formed in the presence of air.

10. The method of claim 1 wherein said polyacrylamide molecules comprise the chemical formula: 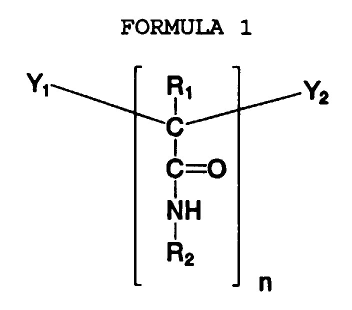 wherein each said R₁ and R₂ may be the same or different and are generally chosen from hydrogen or another chemical group which does not interfere with formation of said covalent bonds, Y₁ and Y₂ may be the same or different and each represent a portion of a polyacrylamide chain or a hydrogen or a CH₃ group, and n is between 1 and 300,000.

11. The method of claim 10 wherein n is between 500 and 10,000.

12. The method of claim 10 wherein R₁ and R₂ are selected from hydrogen, methyl, ethyl, propyl, isopropyl, phenyl, 1-hydroxyethyl, 2-hydroxyethyl, hydroxymethyl, 2-hydroxypropyl, 3-hydroxypropyl, 3-dimethylaminopropyl, 2-dimethylaminoethyl, glycinyl, trishydroxymethyl-methyl, benzyl, phenyl, carboxy-α-hydroxymethyl methyl ester, and 3-methoxypropyl.

13. The method of claim 10 wherein said R₁ and R₂ are chosen from hydrogen, methyl, ethyl, propyl, isopropyl, phenyl, 1-hydroxyethyl, 2-hydroxyethyl, hydroxymethyl, 2-hydroxypropyl.

14. The method of claim 1 wherein said aldehyde is a monoaldehyde or a bialdehyde.

15. The method of claim 1 wherein said aldehyde has the formula RC=OH wherein R is an organic moiety comprising between 1 and 10 carbons, or a chemical bond.

16. The method of claim 1 wherein said aldehyde is formaldehyde and said contacting step includes heating said solution to at least 50°C.

17. The method of claim 14 wherein said bialdehyde has the formula 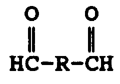 wherein R is an organic group comprising between 1 and 10 carbon atoms, or R is a chemical bond.

18. The method of claim 17 wherein R is a chemical bond and said bialdehyde is glyoxal.

19. The method of claim 17 wherein said R is a paraffinic, olefinic, or aromatic moiety which may contain oxygen, nitrogen, sulfur, boron, fluorine, chlorine, bromine, iodine, sodium, or potassium that may be cyclic, linear or branched.

20. The method of claim 19 wherein said aldehyde is chosen from the group consisting of glutaraldehyde, malonaldehyde, ortho, meta or paraphthalaldehyde, adipaldehyde and hydroxyadipaldehyde.

21. The method of claim 1 wherein said solid gel matrix comprising a crosslinked polyacrylamide comprising the formula: 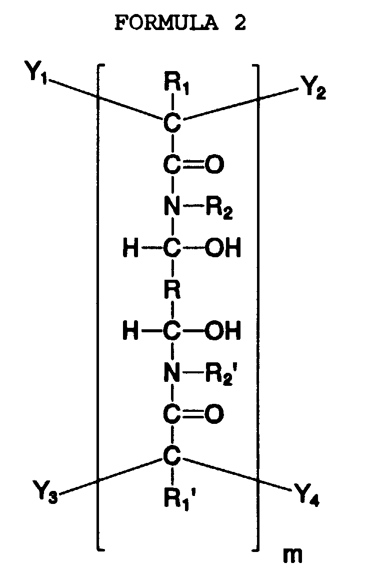 wherein R is an organic group comprising between 1 and 10 carbon atoms, or a chemical bond, and wherein said R₁, R₂, R₁', and R₂' are the same or different and have a chemical formula chosen from hydrogen or another chemical group which does not interfere with formation of said covalent bond, m is between 1 and 300,000 and wherein each said Y₁, Y₂, Y₃ and Y₄ may be the same or different and each represent a portion of a polyacrylamide chain or a hydrogen or a CH₃ group.

22. The method of claim 1 wherein said method further comprises the step of forming said polyacrylamide by contacting acrylamide with an initiator.

23. The method of claim 22 wherein said initiator is chosen from triethanolamine and triethylamine.

24. The method of claim 22 wherein said initiator further comprises ammonium persulfate.

25. The method of claim 22 wherein said initiator is TEMED (tetramethylethylenediamine) and ammonium persulfate.

26. The method of claim 22 wherein said step of forming said polyacrylamide comprises forming a polyacrylamide with a molecular weight between 50,000 to 600,000.

27. A gel matrix formed by the method of claim 1.

28. A polyacrylamide gel matrix comprising a crosslinked polyacrylamide comprising the formula: 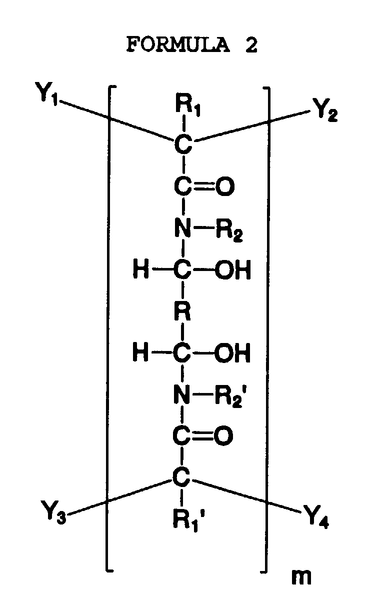 wherein R is an organic group comprising between 1 and 10 carbon atoms, or a chemical bond, and wherein said R₁, R₂, R₁', and R₂' are the same or different and have a chemical formula chosen from hydrogen or another chemical group which does not interfere with formation of said covalent bond, m is between 1 and 300,000, and wherein each said Y₁, Y₂, Y₃ and Y₄ may be the same or different and each represent a portion of a polyacrylamide chain or a hydrogen or a CH₃ group; wherein said gel matrix is adapted to separate HaeIII-treated pBR322 DNA fragments consisting of 587, 540, 504, 458, and 434 base pairs.

29. A kit for forming a gel matrix suitable for the separation of biological molecules comprising in a first separate container polyacrylamide molecules suitable for use in the electrophoresis of biological molecules comprising amide groups wherein said molecules each have a molecular weight of between 100,000 and 400,000, and in a second separate container an aldehyde comprising a plurality of aldehyde groups adapted to covalently bond with at least two of said amide groups on separate polyacrylamide molecules to covalently bond said separate polyacrylamide molecules together and to form said covalent bonds to cause said solution to form a gel matrix suitable for the separation of biological molecules.

30. The kit of claim 29, further comprising, in a third separate container, a base.

31. The kit of claim 29 wherein said polyacrylamide is a homopolymer or a heteropolymer.

32. The kit of claim 29 wherein said polyacrylamide molecules comprise the chemical formula: 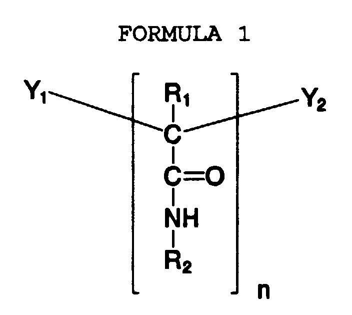 wherein each said R₁ and R₂ may be the same or different and are generally chosen from hydrogen or another chemical group which does not interfere with formation of said covalent bonds, Y₁ and Y₂ may be the same or different and each represent a portion of a polyacrylamide chain or a hydrogen or a CH₃ group, and n is between 1 and 300,000.

33. The kit of claim 32 wherein n is between 500 and 10,000.

34. The kit of claim 32 wherein R₁ and R₂ are selected from hydrogen, methyl, ethyl, propyl, isopropyl, phenyl, 1-hydroxyethyl, 2-hydroxyethyl, hydroxymethyl, 2-hydroxpropyl, 3-hydroxypropyl, 3-dimethylaminopropyl, 2-dimethylaminoethyl, glycinyl, trishydroxymethylmethyl, benzyl, phenyl, carboxy-α-hydroxymethyl methyl ester, and 3-methoxypropyl.

35. The kit of claim 32 wherein R₁ and R₂ are chosen from hydrogen, methyl, ethyl, propyl, isopropyl, phenyl, 1-hydroxyethyl, 2-hydroxyethyl, hydroxymethyl, 2-hydroxypropyl.

36. The kit of claim 34 wherein said bialdehyde has has the formula 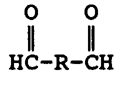 wherein R is an organic group comprising between 1 and 10 carbon atoms, or R is a chemical bond.

37. The kit of claim 36 wherein said bialdehyde is glyoxal.

38. The kit of claim 36 wherein said R is a paraffinic, olefinic, or aromatic moiety which may contain oxygen, nitrogen, sulfur, boron, fluorine, chlorine, bromine, iodine, sodium, or potassium that may be cyclic, linear or branched.

39. A method for purifying a biological macromolecule comprising passing said biological macromolecule through a gel matrix formed by the method of claim 1 to separate said biological macromolecule from other components with which it occurs.

40. The method of claim 39 further comprising causing removing said biological macromolecule from said gel matrix by liquefying said gel matrix.

41. The method of claim 40 wherein said gel matrix is caused to liquify by heating at between 40°C and 100°C.

42. The method of claim 40 wherein said gel matrix is caused to liquify by treatment with periodate.

43. The method of claim 40 wherein said periodate treatment is performed at a temperature between 4°C and 40°C.

44. A method for producing a mold, comprising the steps of:
forming a gel matrix by the method of claim 1 into a desired shape, and
causing water within said gel matrix to evaporate and thereby reduce in volume to produce a mold having said desired shape.

45. A gel matrix as claimed in claim 28 or as produced according to any one of claims 1 to 26, for use in a method of medical treatment.

46. Use of a gel matrix as claimed in claim 28 or as produced according to any one of claims 1 to 26 in the manufacture of a medicament for use in dressing a wound.

47. A method for culturing cells comprising providing a gel matrix formed by the method of claim 1 said gel matrix comprising nutrient ingredients.

## Patentansprüche

1. Verfahren zum Bilden einer biologische Moleküle abtrennenden festen Gelmatrix, umfassend die Schritte:
des Kontaktierens in einer alkalischen Lösung von:
(a) homopolymeren oder heteropolymeren, Amidgruppen umfassenden Polyacrylamid-molekülen, wobei die Moleküle jeweils ein Molekulargewicht zwischen 100.000 und 400.000 besitzen, und
(b) eines Aldehyds, der so gewählt ist, daß er sich mit mindestens zwei der Amidgruppen auf getrennten Polyacrylamidmolekülen kovalent verbindet, um die getrennten Polyacrylamidmoleküle miteinander kovalent zu verbinden; wobei die kovalenten Bindungen gebildet werden und dazu führen, daß die Lösung eine feste Gelmatrix bildet, die für die Trennung von biologischen Molekülen ausgelegt ist.

2. Verfahren gemäß Anspruch 1, wobei die Moleküle, welche miteinander kovalent verbunden sind, eine Amidgruppe beinhalten, welche durch Erwärmen der Moleküle bei einer Temperatur zwischen 40 °C und 100 °C und einem pH-Wert von über 7,0 gespalten wird.

3. Verfahren gemäß Anspruch 2, wobei sich nach dem Erwärmen die feste Gelmatrix verflüssigt und sich nach Abkühlen auf 20 °C nicht wieder verfestigt.

4. Verfahren gemäß Anspruch 3, wobei das heteropolymere Molekül Amid- und Estergruppen beinhaltet.

5. Verfahren gemäß Anspruch 1, wobei die Konzentration der Moleküle in der Lösung und das Molekulargewicht der Moleküle so gewählt sind, daß eine Gelmatrix gebildet wird, die zur Abtrennung von biologischen Makromolekülen angepaßt ist.

6. Verfahren gemäß Anspruch 1, wobei die Konzentration der Moleküle in der Lösung und das Molekulargewicht der Moleküle so gewählt sind, daß eine optisch klare Gelmatrix gebildet wird.

7. Verfahren gemäß Anspruch 1, wobei die Konzentrationen der Moleküle in der Lösung und das Molekulargewicht der Moleküle so gewählt sind, daß eine feste Gelmatrix gebildet wird, die so angepaßt ist, daß sie die Abtrennung von HaeIII-verdauten pBR322-DNA-Fragmenten, die aus 587, 540, 504, 458 und 434 Basenpaaren bestehen, oder λ-EcoRI-HindIII-DNA-Fragmenten, die aus 5148, 4973 und 4277 Basenpaaren bestehen, oder λ-HindIII-DNA-Fragmenten, die aus 23000, 9416, 6557 und 4361 Basenpaaren bestehen, ermöglicht.

8. Verfahren gemäß Anspruch 1, wobei die Gelmatrix in Gegenwart von Sauerstoff gebildet wird.

9. Verfahren gemäß Anspruch 8, wobei die Gelmatrix in Gegenwart von Luft gebildet wird.

10. Verfahren gemäß Anspruch 1, wobei die Polyacrylamidmoleküle folgende chemische Formel umfassen: 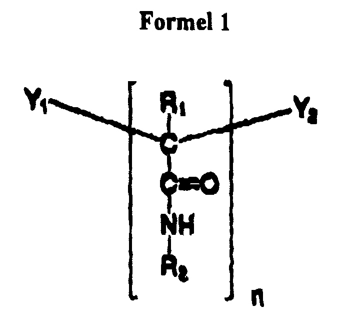 worin jedes von R₁ und R₂ gleich oder unterschiedlich sein kann und im allgemeinen aus Wasserstoff oder einer anderen chemischen Gruppe gewählt wird, welche die Bildung der kovalenten Bindungen nicht stört, Y₁ und Y₂ gleich oder unterschiedlich sein können und jeweils einen Abschnitt einer Polyacrylamidkette oder ein Wasserstoffatom oder eine CH₃-Gruppe bedeuten und n zwischen 1 und 300.000 liegt.

11. Verfahren gemäß Anspruch 10, wobei n zwischen 500 und 10.000 liegt.

12. Verfahren gemäß Anspruch 10, worin R₁ und R₂ gewählt werden aus: Wasserstoff, Methyl, Ethyl, Propyl, Isopropyl, Phenyl, 1-Hydroxyethyl, 2-Hydroxyethyl, Hydroxymethyl, 2-Hydroxypropyl, 3-Hydroxypropyl, 3-Dimethylaminopropyl, 2-Dimethylaminoethyl, Gycinyl, Trishydroxymethyl-methyl, Benzyl, Phenyl, Carboxy-α-hydroxymethyl-methylester und 3-Methoxypropyl.

13. Verfahren gemäß Anspruch 10, worin das R₁ und R₂ gewählt wird aus: Wasserstoff, Methyl, Ethyl, Propyl, Isopropyl, Phenyl, 1-Hydroxyethyl, 2-Hydroxyethyl, Hydroxymethyl, 2-Hydroxypropyl.

14. Verfahren gemäß Anspruch 1, worin der Aldehyd ein Monoaldehyd oder ein Bialdehyd ist.

15. Verfahren gemäß Anspruch 1, worin der Aldehyd die Formel RC=OH besitzt, in der R ein organischer Rest, welcher 1 bis 10 Kohlenstoffatome beinhaltet, oder eine chemische Bindung ist.

16. Verfahren gemäß Anspruch 1, worin der Aldehyd Formaldehyd ist und der Kontaktierungsschritt das Erwärmen der Lösung auf mindestens 50 °C einschließt.

17. Verfahren gemäß Anspruch 14, wobei der Bialdehyd die Formel 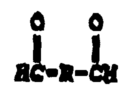 hat, worin R eine organische Gruppe mit 1 bis 10 Kohlenstoffatomen ist oder R eine chemische Bindung bedeutet.

18. Verfahren gemäß Anspruch 17, worin R eine chemische Bindung ist und der Bialdehyd Glyoxal ist.

19. Verfahren gemäß Anspruch 17, wobei R ein paraffinischer, olefinischer oder aromatischer Rest ist, welcher Sauerstoff, Stickstoff, Schwefel, Bor, Fluor, Chlor, Brom, Iod, Natrium oder Kalium enthalten kann, der cyclisch, linear oder verzweigt sein kann.

20. Verfahren gemäß Anspruch 19, worin der Aldehyd gewählt wird aus der Glutaraldehyd, Malonaldehyd, Ortho-, Meta- oder Paraphthalaldehyd, Adipaldehyd und Hydroxyadipaldehyd umfassenden Gruppe.

21. Verfahren gemäß Anspruch 1, worin die feste Gelmatrix ein vernetztes Polyacrylamid beinhaltet, welches folgende Formel umfaßt: 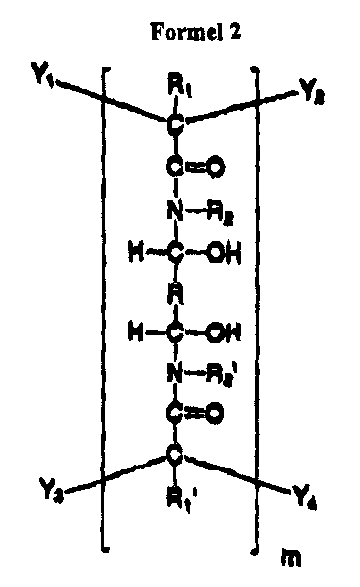 worin R eine organische Gruppe mit 1 bis 10 Kohlenstoffatomen oder eine chemische Bindung ist, und worin R₁, R₂, R₁' und R₂' gleich oder unterschiedlich sind und eine chemische Formel aufweisen, die gewählt ist aus Wasserstoff oder einer anderen chemischen Gruppe, welche die Bildung der kovalenten Bindung nicht stört, m zwischen 1 und 300.000 ist und worin jedes von Y₁, Y₂, Y₃ und Y₄ gleich oder unterschiedlich ist und jeweils einen Abschnitt einer Polyacrylamidkette oder ein Wasserstoffatom oder eine CH₃- Gruppe bedeutet.

22. Verfahren gemäß Anspruch 1, wobei das Verfahren ferner den Schritt des Bildens des Polyacrylamids durch Kontaktieren von Acrylamid mit einem Initiator umfaßt.

23. Verfahren gemäß Anspruch 22, wobei der Initiator gewählt wird aus Triethanolamin und Triethylamin.

24. Verfahren gemäß Anspruch 22, wobei der Initiator ferner Ammoniumpersulfat umfaßt.

25. Verfahren gemäß Anspruch 22, wobei der Initiator TEMED (Tetramethylethylendiamin) und Ammoniumpersulfat ist.

26. Verfahren gemäß Anspruch 22, wobei der Schritt des Bildens des Polyacrylamids das Bilden eines Polyacrylamids mit einem Molekulargewicht zwischen 50.000 und 600.000 umfaßt.

27. Gelmatrix, die durch das Verfahren gemäß Anspruch 1 gebildet wird.

28. Polyacrylamidgelmatrix, umfassend ein vernetztes Polyacrylamid, das folgende Formel umfaßt: 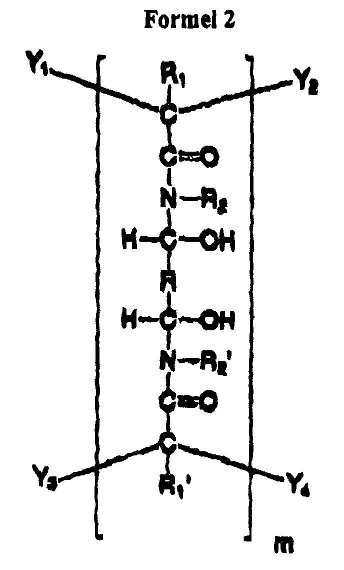 worin R eine organische Gruppe mit 1 bis 10 Kohlenstoffatomen oder eine chemische Bindung ist, und worin R₁, R₂, R₁' und R₂' gleich oder unterschiedlich sind und eine chemische Formel aufweisen, die gewählt ist aus Wasserstoff oder einer anderen chemischen Gruppe, welche die Bildung der kovalenten Bindung nicht stört, m zwischen 1 und 300.000 ist und worin jedes von Y₁, Y₂, Y₃ und Y₄ gleich oder unterschiedlich ist und jeweils einen Abschnitt einer Polyacrylamidkette oder ein Wasserstoffatom oder eine CH₃-Gruppe bedeutet; wobei die Gelmatrix für die Abtrennung von HaeIII-behandelten pBR322-DNA-Fragmenten, welche aus 587, 540, 504, 458 und 434 Basenpaare bestehen, ausgelegt ist.

29. Kit zum Bilden einer Gelmatrix, die für die Abtrennung biologischer Moleküle geeignet ist, umfassend in einem ersten separaten Behälter Polyacrylamidmoleküle, die zur Verwendung bei der Elektrophorese biologischer Moleküle geeignet sind, umfassend Amidgruppen, wobei die Moleküle jeweils ein Molekulargewicht zwischen 100.000 und 400.000 aufweisen, und in einem zweiten separaten Behälter ein Aldehyd, der eine Vielzahl von Aldehydgruppen beinhaltet, der so gewählt ist, daß eine kovalente Bindung mit mindestens 2 der Amidgruppen auf getrennten Polyacrylamidmolekülen auftritt, um die getrennten Polyacrylamidmoleküle miteinander kovalent zu binden und die kovalenten Bindungen auszubilden, um zu erreichen, daß die Lösung eine Gelmatrix bildet, die zur Abtrennung von biologischen Molekülen geeignet ist.

30. Kit gemäß Anspruch 29, ferner eine Base in einem dritten separaten Behälter umfassend.

31. Kit gemäß Anspruch 29, wobei das Polyacrylamid ein Homopolymer oder ein Heteropolymer ist.

32. Kit gemäß Anspruch 29, wobei die Polyacrylamidmoleküle folgende chemische Formel umfassen: 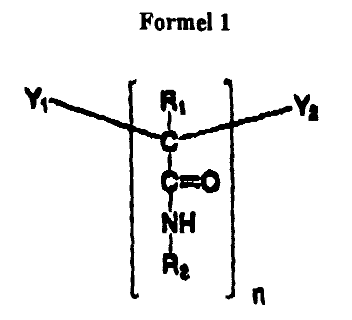 worin jedes von R₁ und R₂ gleich oder unterschiedlich sein kann und im allgemeinen aus Wasserstoff oder einer anderen chemischen Gruppe gewählt wird, welche die Bildung der kovalenten Bindungen nicht stört, Y₁ und Y₂ gleich oder unterschiedlich sein können und jeweils einen Abschnitt einer Polyacrylamidkette oder ein Wasserstoffatom oder eine CH₃-Gruppe bedeuten und n zwischen 1 und 300.000 liegt.

33. Kit gemäß Anspruch 32, wobei n zwischen 500 und 10.000 liegt.

34. Kit gemäß Anspruch 32, wobei R₁ und R₂ gewählt werden aus: Wasserstoff, Methyl, Ethyl, Propyl, Isopropyl, Phenyl, 1-Hydroxyethyl, 2-Hydroxyethyl, Hydroxymethyl, 2-Hydroxypropyl, 3-Hydroxypropyl, 3-Dimethylaminopropyl, 2-Dimethylaminoethyl, Gycinyl, Trishydroxymethylmethyl, Benzyl, Phenyl, Carboxy-α-hydroxymethylmethylester und 3-Methoxypropyl.

35. Kit gemäß Anspruch 32, wobei R₁ und R₂ gewählt werden aus: Wasserstoff, Methyl, Ethyl, Propyl, Isopropyl, Phenyl, 1-Hydroxyethyl, 2-Hydroxyethyl, Hydroxymethyl, 2-Hydroxypropyl.

36. Kit gemäß Anspruch 34, wobei der Bialdehyd die Formel 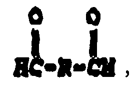 worin R eine organische Gruppe mit 1 bis 10 Kohlenstoffatomen ist oder R eine chemische Bindung bedeutet.

37. Kit gemäß Anspruch 36, wobei der Bialdehyd Glyoxal ist.

38. Kit gemäß Anspruch 36, wobei R ein paraffinischer, olefinischer oder aromatischer Rest ist, welcher Sauerstoff, Stickstoff, Schwefel, Bor, Fluor, Chlor, Brom, Iod, Natrium oder Kalium enthalten kann, der cyclisch, linear oder verzweigt sein kann.

39. Verfahren zur Reinigung eines biologischen Makromoleküls, umfassend das Hindurchführen des biologischen Makromoleküls durch eine Gelmatrix, die durch das Verfahren gemäß Anspruch 1 gebildet wurde, um das biologische Makromolekül von anderen Komponenten, mit denen es auftritt, abzutrennen.

40. Verfahren gemäß Anspruch 39, ferner umfassend das Entfernen des biologischen Makromoleküls von der Gelmatrix durch Verflüssigen der Gelmatrix.

41. Verfahren gemäß Anspruch 40, wobei die Gelmatrix durch Erwärmen zwischen 40 °C und 100 °C verflüssigt wird.

42. Verfahren gemäß Anspruch 40, wobei die Gelmatrix durch die Behandlung rnit Periodat verflüssigt wird.

43. Verfahren gemäß Anspruch 40, wobei die Periodatbehandlung bei einer Temperatur zwischen 4 °C und 40 °C durchgeführt wird.

44. Verfahren zur Bildung einer Form, umfassend folgende Schritte:
Formen einer Gelmatrix durch das Verfahren gemäß Anspruch 1 zu einer gewünschten Gestalt und
Bewirken, daß Wasser innerhalb der Gelmatrix verdampft und dadurch das Volumen abnimmt, um eine Form der gewünschten Gestalt zu erzeugen.

45. Gelmatrix, wie in Anspruch 28 beansprucht oder gemäß mindestens einem der Ansprüche 1 bis 26 hergestellt, zur Verwendung bei einem Verfahren einer medizinischen Behandlung.

46. Verwendung einer Gelmatrix, wie in Anspruch 28 beansprucht oder wie nach einem der Ansprüche 1 bis 26 hergestellt, bei der Herstellung eines Medikamentes zur Verwendung beim Verbinden bzw. Versorgen einer Wunde.

47. Verfahren zur Kultivierung von Zellen, umfassend das Bereitstellen einer Gelmatrix, die durch das Verfahren gemäß Anspruch 1 gebildet wurde, wobei die Gelmatrix Nährbestandteile umfaßt.

## Revendications

1. Procédé pour préparer une matrice de gel solide permettant de séparer des molécules biologiques, comprenant les étapes consistant
- à mettre en contact dans une solution alcaline :
(a) des molécules de polyacrylamide homopolymère ou copolymère comprenant des grpupes amide, lesdites molécules ayant chacune une masse molaire comprise entre 100 000 et 400 000, et
(b) un aldéhyde capable de former des liaisons covalentes avec au moins deux desdits groupes amide situés sur des molécules de polyacrylamide séparées de manière à lier entre elles lesdites molécules de polyacrylamide séparées, lesdites liaisons covalentes étant formées et entraînant la conversion de ladite solution en une matrice de gel solide permettant de séparer des molécules biologiques.

2. Procédé selon la revendication 1 dans lequel lesdites molécules liées covalentement entre elles comportent un groupe amide qui est éliminé par chauffage de ladite molécule à une température comprise entre 40 °C et 100 °C et à un pH supérieur à 7,0.

3. Procédé selon la revendication 2 dans lequel ladite matrice de gel solide est liquéfiée après chauffage et ne se solidifie plus lorsqu'on la refroidit à 20 °C.

4. Procédé selon la revendication 3 dans lequel ladite molécule copolymère comprend des groupes ester et amide.

5. Procédé selon la revendication 1 dans lequel la concentration desdites molécules dans ladite solution et la masse molaire desdites molécules sont choisies de manière à former une matrice de gel permettant de séparer des macromolécules biologiques.

6. Procédé selon la revendication 1 dans lequel la concentration desdites molécules dans ladite solution et la masse molaire desdites molécules sont choisies de manière à former une matrice de gel optiquement limpide.

7. Procédé selon la revendication 1 dans lequel la concentration desdites molécules dans ladite solution et la masse molaire desdites molécules sont choisies de manière à former une matrice de gel solide capable de séparer des fragments d'ADN de pBR322 digérés par *Hae*III constitués de 587, 540, 504, 458 et 434 paires de bases, ou des fragments *Eco*RI-*Hind*III d'ADN de phage lambda constitués de 5148, 4973 et 4277 paires de bases, ou des fragments d'ADN de phage lambda digéré par *Hind*III constitués de 23 000, 9416, 6557 et 4361 paires de bases.

8. Procédé selon la revendication 1 dans lequel ladite matrice de gel est formée en présence d'oxygène.

9. Procédé selon la revendication 8 dans lequel ladite matrice de gel est formée en présence d'air.

10. Procédé selon la revendication 1 dans lequel lesdites molécules de polyacrylamide contenant des motifs de formule 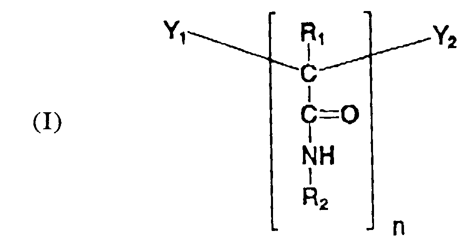 dans laquelle les groupes R₁ et R₂, identiques ou différents, sont généralement choisis parmi un atome d'hydrogène ou un autre groupe chimique qui n'interfère pas avec la formation desdites liaisons covalentes, Y₁ et Y₂ peuvent être identiques ou différents et représentent chacun une partie d'une chaîne de polyacrylamide ou un atome d'hydrogène ou un groupe CH₃, et n vaut entre 1 et 300 000.

11. Procédé selon la revendication 10 dans lequel n vaut entre 500 et 10 000.

12. Procédé selon la revendication 10 dans lequel R₁ et R₂ sont choisis parmi un atome d'hydrogène, un groupe méthyle, éthyle, propyle, isopropyle, phényle, 1-hydroxyéthyle, 2-hydroxyéthyle, hydroxyméthyle, 2-hydroxypropyle, 3-hydroxypropyle, 3-diméthylaminopropyle, 2-diméthylaminoéthyle, glycinyle, tris(hydroxyméthyl)méthyle, benzyle, phényle, α-hydroxyméthylcarboxylate de méthyle et 3-méthoxypropyle.

13. Procédé selon la revendication 10 dans lequel lesdits groupes R₁ et R₂ sont choisis parmi un atome d'hydrogène, un groupe méthyle, éthyle, propyle, isopropyle, phényle, 1-hydroxyéthyle, 2-hydroxyéthyle, hydroxyméthyle ou 2-hydroxypropyle.

14. Procédé selon la revendication 1 dans lequel ledit aldéhyde est un monoaldéhyde ou un dialdéhyde.

15. Procédé selon la revendication 1 dans lequel ledit aldéhyde correspond à la formule R(C=O)H où R représente un groupe organique comportant de 1 à 10 atomes de carbone ou une liaison chimique.

16. Procédé selon la revendication 1 dans lequel ledit aldéhyde est le formaldéhyde et ladite étape de mise en contact comprend le chauffage de ladite solution à une température au moins égale à 50 °C.

17. Procédé selon la revendication 14 dans lequel ledit dialdéhyde correspond à la formule HC(=O)-R-C(=O)H où R représente un groupe organique comprenant entre 1 et 10 atomes de carbone ou R est une liaison chimique.

18. Procédé selon la revendication 17 dans lequel R représente une liaison chimique et ledit dialdéhyde est le glyoxal.

19. Procédé selon la revendication 17 dans lequel ledit groupe R est un groupe paraffinique, oléfinique ou aromatique qui peut contenir des atomes d'oxygène, d'azote, de soufre, de bore, de fluor, de chlore, de brome, d'iode, de sodium ou de potassium et qui peut être cyclique, linéaire ou ramifié.

20. Procédé selon la revendication 19 dans lequel ledit aldéhyde est choisi dans le groupe formé par le glutaraldéhyde, le malonaldéhyde, l'ortho-, méta- ou para-phtalaldéhyde, l'adipaldéhyde et l'hydroxyadipaldéhyde.

21. Procédé selon la revendication 1 dans lequel ladite matrice de gel solide comprend un polyacrylamide réticulé contenant des motifs de formule 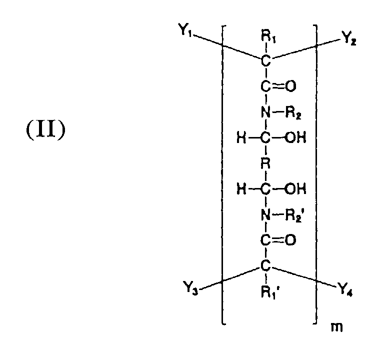 dans laquelle R représente un groupe organique comportant entre 1 et 10 atomes de carbone ou une liaison chimique, et dans laquelle lesdits groupes R₁, R₂, R₁' et R₂' sont identiques ou différents et correspondent à une formule chimique choisie parmi un atome d'hydrogène ou un autre groupe chimique qui n'interfère pas avec la formation de ladite liaison covalente, m vaut entre 1 et 300 000, et dans laquelle les groupes Y₁, Y₂, Y₃ et Y₄ sont identiques ou différents et représentent chacun une partie d'une chaîne de polyacrylamide ou un atome d'hydrogène ou un groupe CH₃.

22. Procédé selon la revendication 1 dans lequel ledit procédé comprend en outre l'étape consistant à former ledit polyacrylamide en mettant en contact de l'acrylamide avec un amorceur.

23. Procédé selon la revendication 22 dans lequel ledit amorceur est choisi parmi la triéthanolamine et la triéthylamine.

24. Procédé selon la revendication 22 dans lequel ledit amorceur comprend en outre du persulfate d'ammonium.

25. Procédé selon la revendication 22 dans lequel ledit amorceur est du TEMED (tétraméthyléthylènediamine) et du persulfate d'ammonium.

26. Procédé selon la revendication 22 dans lequel ladite étape de préparation dudit polyacrylamide comprend la préparation d'un polyacrylamide ayant une masse molaire comprise entre 50 000 et 600 000.

27. Matrice de gel préparée selon le procédé de la revendication 1.

28. Matrice de gel de polyacrylamide comprenant un polyacrylamide réticulé comprenant des motif de formule 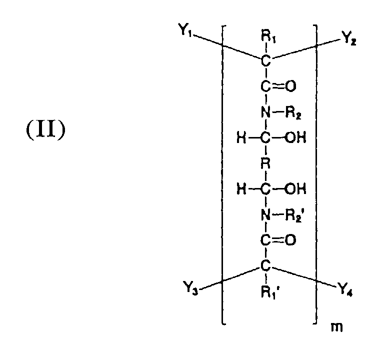 dans laquelle R représente un groupe organique comportant entre 1 et 10 atomes de carbone ou une liaison chimique, et dans laquelle lesdits groupes R₁, R₂, R₁' et R₂' sont identiques ou différents et correspondent à une formule chimique choisie parmi un atome d'hydrogène ou un autre groupe chimique qui n'interfère pas avec la formation de ladite liaison covalente, m vaut entre 1 et 300 000, et dans laquelle les groupes Y₁, Y₂, Y₃ et Y₄ sont identiques ou différents et représentent chacun une partie d'une chaîne de polyacrylamide ou un atome d'hydrogène ou un groupe CH₃, ladite matrice de gel permettant de séparer des fragments d'ADN de pBR322 digéré par *Hae*III comportant 587, 540, 504, 458 et 434 paires de bases.

29. Kit de préparation d'une matrice de gel permettant la séparation de molécules biologiques comprenant, dans un premier récipient séparé, des molécules de polyacrylamide appropriées pour être utilisées dans l'électrophorèse de molécules biologiques, comprenant des groupes amide, lesdites molécules ayant chacune une masse molaire comprise entre 100 000 et 400 000 et, dans un deuxième récipient séparé, un aldéhyde comprenant une multitude de fonctions aldéhyde capables de former des liaisons covalentes avec au moins deux groupes amide situés sur des molécules de polyacrylamide séparées de manière à lier covalentement entre elles lesdites molécules de polyacrylamide séparées et de former lesdites liaisons covalentes afin de convertir ladite solution en une matrice de gel permettant de séparer des molécules biologiques.

30. Kit selon la revendication 29 comprenant en outre, dans un troisième récipient séparé, une base.

31. Kit selon la revendication 29 dans lequel ledit polyacrylamide est un homopolymère ou un copolymère.

32. Kit selon la revendication 29 dans lequel lesdites molécules de polyacrylamide contiennent des motifs de formule 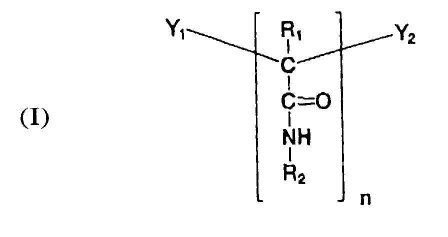 dans laquelle les groupes R₁ et R₂ peuvent être identiques ou différents et sont généralement choisis parmi un atome d'hydrogène ou un autre groupe chimique qui n'interfère pas avec la formation desdites liaisons covalentes, Y₁ et Y₂ peuvent être identiques ou différents et représentent chacun une partie d'une chaîne de polyacrylamide ou un atome d'hydrogène ou un groupe CH₃, et n vaut entre 1 et 300 000.

33. Kit selon la revendication 32 dans lequel n vaut entre 500 et 10 000.

34. Kit selon la revendication 32 dans lequel R₁ et R₂ sont choisis parmi un atome d'hydrogène, un groupe méthyle, éthyle, propyle, isopropyle, phényle, 1-hydroxyéthyle, 2-hydroxyéthyle, hydroxyméthyle, 2-hydroxypropyle, 3-hydroxypropyle, 3-diméthylaminopropyle, 2-diméthylaminoéthyle, glycinyle, tris(hydroxyméthyl)méthyle, benzyle, phényle, α-hydroxyméthylcarboxylate de méthyle et 3-méthoxypropyle.

35. Kit selon la revendication 32 dans lequel lesdits groupes R₁ et R₂ sont choisis parmi un atome d'hydrogène, un groupe méthyle, éthyle, propyle, isopropyle, phényle, 1-hydroxyéthyle, 2-hydroxyéthyle, hydroxyméthyle et 2-hydroxypropyle.

36. Kit selon la revendication 34 dans lequel ledit dialdéhyde correspond à la formule HC(=O)-R-C(=O)H où R représente un groupe organique comportant entre 1 et 10 atomes de carbone ou R est une liaison chimique.

37. Kit selon la revendication 36 dans lequel ledit dialdéhyde est le glyoxal.

38. Kit selon la revendication 36 dans lequel ledit groupe R est un groupe paraffinique, oléfinique ou aromatique qui peut contenir des atomes d'oxygène, d'azote, de soufre, de bore, de fluor, de chlore, de brome, d'iode, de sodium ou de potassium et qui peut être cyclique, linéaire ou ramifié.

39. Procédé de purification d'une macromolécule biologique comprenant le fait de faire passer ladite macromolécule biologique à travers une matrice de gel préparée selon le procédé de la revendication 1 afin de séparer ladite macromolécule biologique des autres composants qui l'accompagnent.

40. Procédé selon la revendication 39 comprenant en outre la séparation de ladite macromolécule biologique d'avec ladite matrice de gel par liquéfaction de ladite matrice de gel.

41. Procédé selon la revendication 40 dans lequel on liquéfie ladite matrice de gel en la chauffant à une température comprise entre 40 °C et 100 °C.

42. Procédé selon la revendication 40 dans lequel on liquéfie ladite matrice de gel en la traitant avec du periodate.

43. Procédé selon la revendication 40 dans lequel ledit traitement de périodate est effectué à une température comprise entre 4 °C et 40 °C.

44. Procédé de préparation d'un moule, comprenant les étapes consistant :
- à préparer une matrice de gel selon le procédé de la revendication 1 en lui donnant une forme désirée, et
- à évaporer l'eau contenue dans ladite matrice de gel et à réduire ainsi le volume de celle-ci de manière à préparer un moule ayant ladite forme désirée.

45. Matrice de gel selon la revendication 28 ou préparée conformément à l'une quelconque des revendications 1 à 26 destinée à être utilisée dans une méthode de traitement médical.

46. Utilisation d'une matrice de gel selon la revendication 28 ou préparée selon l'une quelconque des revendications 1 à 26 dans la fabrication d'un médicament pour le pansement de plaies.

47. Procédé de culture de cellules comprenant le fait d'utiliser une matrice de gel préparée selon le procédé de la revendication 1, ladite matrice de gel comprenant des ingrédients nutritifs.
